# EUROPEAN PATENT SPECIFICATION

(11) **EP 1 600 425 B1**
(45) Date of publication and mention of the grant of the patent: **11.10.2006**
(21) Application number: 04710108.4
(22) Date of filing: 11.02.2004
(51) Int. Cl.: C02F 1/38

(54) **WASTEWATER PURIFICATION APPARATUS**
VORRICHTUNG ZUR ABWASSERBEHANDLUNG
APPAREIL DE TRAITEMENT D'EAUX RESIDUAIRES

(30) Priority: 19.02.2003 ES 200300405
(43) Date of publication of application: 30.11.2005
(73) Proprietor: Nola, Felice Guglielmo, Bolognia (IT)
(72) Inventor: NOLA, Felice, Guglielmo, I-Bolognia (IT); RAPPINI, Gherardi, Sergio, I-Bolonia (IT)
(74) Representative: Adorno, Silvano
(86) International application number: PCT/IB2004/000973
(87) International publication number: WO 2004/074184

(56) References cited:
- EP-A- 0 671 465
- EP-A- 0 978 482
- US-A- 5 207 920

## Description

### OBJECT OF THE INVENTION

The object of the present Patent Application is to register a device for the treatment of waste waters in general that includes significant innovations and advantages compared to the present waste water treatment devices and systems and similar devices.

More specifically the new invention includes a filtration system with a waste water vertical centrifuge stage, a stage for the injection of air and chemical reagents to bring about flocculation of the solids and to lighten them in order to cause them to float in the water. After this stage the device has a separation system for the floating particles by means of a differential pitch screw and a level regulator.

### BACKGROUND TO THE INVENTION

At the present time there is a large variety of systems for waste water treatment given the problems caused in handling them. Among the different systems there is the separation of sludge by flotation means, in which the waste water is introduced into large tanks. In said tanks the water is brought into contact with air under pressure bubbling on the inside. The air bubbles in contact with pollutant solid particles held in suspension in the water bring about the flocculation of same in aggregates of greater significance, which rise to the surface where they float. When the pollutant particles have been separated from the water and accumulated on the surface by floatation their removal can be proceeded with by blades or scrapers. A considerable period of time is necessary to carry out this operation.

The separation of heavier sludge by centrifuge is also common. In this process the waste water is subjected to centrifugal movement in a drum or by means of paddles and similar devices which facilitates the depositing of the heavier sludge. However, the separation of pollutant elements is limited up to a certain size and consistency, with which the smaller particles remain in suspension. The document EP 0 978 482 A1 describes an apparatus for the combined treatment of waste water by centrifugal separation and flotation.

In these filtration systems the use of chemical reagents is usual which encourage the separation of pollutant substances, thus carrying out a physical-chemical filtration.

### DESCRIPTION OF THE INVENTION

The waste water filtration device that is the object of the present registration is characterised because it involves a system with a reduced size and low energy need in comparison with other filtration systems and which combines a first stage with a centrifugal filtration device, in which the heavy solid sludge particles are removed and the water is pressurised with air bubbles, the addition of reagents and the mixing of the resulting liquid and a final phase of light particle separation by flotation in a suitable device, the complete assembly obtains high efficiency.

In effect the new invention includes the separation by centrifuge in the first device which has a first tank in which there is a vertical centrifuge. This vertical centrifuge includes a vertical drum turned by a high speed motor. The drum has a cylindrical section and at the lower part a tronco-conical section, the lower part being open. On the inner surface of said drum there is a series of small vertical channels or seams. When the drum is turned the water rises up the walls as a result of the centrifugal action and exits by the upper rim. In turn, on the inside of the drum there is an Archimedean screw arranged between two eccentric bearings, in such a way that they also turn when the drum turns but at a lesser velocity, dragged by the water. The heavy sludge particles accumulate on the lower walls of the screw propeller, becoming dehydrated. Because of their weight, this sludge descends until it falls out of the lower opening in the centrifuge, completely dehydrated.

The air rising up the revolving drum gathers air from the turbulence generated. In the upper part of the centrifuge there is, in addition to the entry of water to be filtered, a pressurisation chamber with a number of fins which gather the rising layer from the waste water without either the heavy sludge particles or the voluminous particles. In this chamber the turbulence and the air brought by the water are regulated in the form of bubbles that are used for the capture of the light pollutant particles.

At the exit from the vertical centrifuge pressurisation chamber there is a static mixer, such as a chamber with a number of grids and into which the chemical products are added, causing the flocculation of the pollutant particles in suspension. In said dynamic mixer a reduced quantity reagents is necessary, as the heavy sludge and voluminous particles have been removed from the waste water in the previous stage, achieving greater efficiency and economy.

Next the waste water enters a dynamic flotation separation device. Said device is made up of a tank in which there is a horizontally arranged screw and turned by a variable speed motor. This screw has been designed with a variable pitch differential, said step being of lesser importance as it is located next to outlet end of the tank. In this tank the pollutant particles in suspension are gathered together by the effect of the air bubbles and the chemical reagents, forming aggregates of a certain importance and light sludge which floats. In line with the turn of the screw, this sludge is pushed towards the exit at the other end and in turn compacted by reducing the passage of the turns of same.

At the end of the screw there is a level separation device for the flocculated sludge and compacted from the clarified water. Effectively, at the flotation tank exit end there is an adjustable height level that establishes a dumping on top of the sludge by an exit evacuation. There is also an outlet tube for the clarified water at the lower part of the tank.

As previously stated the screw is made up of a variable pitch spiral blade. In turn the speed of the motor can be adjusted so as to move the light sludge towards the dumping and how they are compacted as the speed is variable.

The machine of the new invention is compact and small in size, allowing easy transport and assembly without the need for space or large installations. This is because the tanks used in the centrifuge stage and the sludge floatation stage do not need to store the water to be treated for a long period of time, but are kept circulating in a constant manner. By keeping the water to be treated circulating means its use is practically uninterrupted.

In order to complete the description that is going to be made below and for the purpose of helping to give a greater understanding of its characteristics, the present description is accompanied by a set of drawings, where the most significant details of the invention are represented.

### BRIEF DESCRIPTION OF THE DRAWINGS

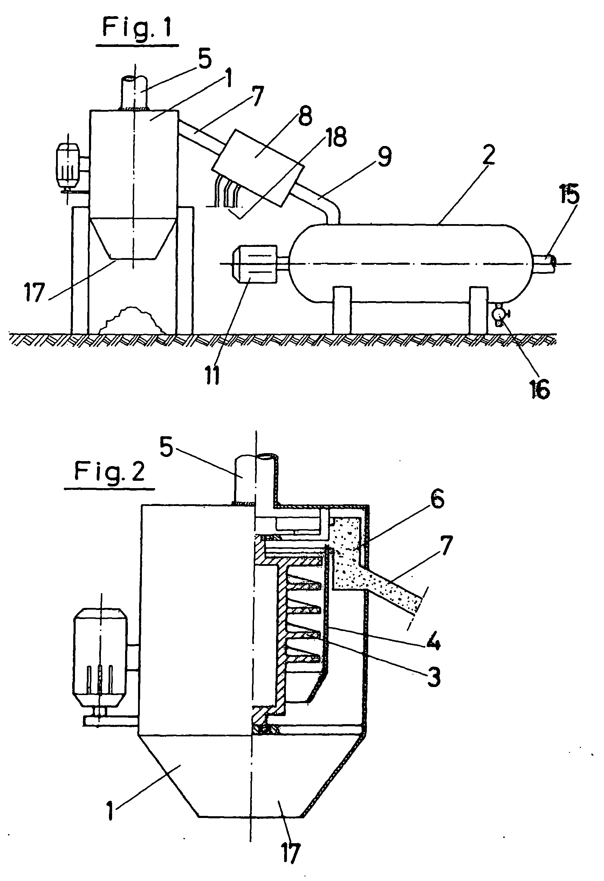

Figure 1 shows a sectioned side elevation diagram of the device of the present invention.
Figure 2 shows a semi-sectioned side elevation diagram of the centrifuge separation device.

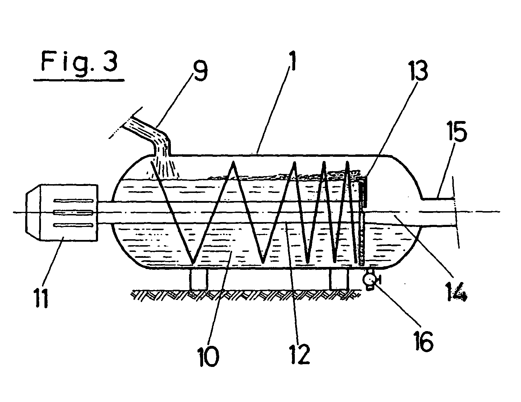

Figure 3 shows a diagram elevation of the dynamic flotation separation device with internal details.

### DESCRIPTION OF THE PREFERRED EMBODIMENT

In light of the commented on figures and in accordance with the adopted numbering, a preferred embodiment can be seen in same. This consists of a centrifuge device (1) comprising a centrifuge drum (4) moved by a motor and that has, at least on the inside, a tronco-conical section. On the inner walls of said drum (4) there is a series of small vertical channels or seams. On the internal hollow of the drum (4) there is an Archimedean screw arranged co-axially and freely held by bearings at the ends of its axis. The device (1) has an upper opening (5) for the waste water to be treated on the drum (4) and the Archimedean screw (3). In turn, said device (1) has a lower outlet (17) for the dumping of the heavy dehydrated sludge, faced by the lower drum (4) opening. On the upper part of the device (1) and above the drum there is a pressure chamber (6) with a series of blades which come into contact with the water rising up the vertical drum (4) walls.

The pressure chamber (6) has an exit (7) connected to a static mixer (8), which is also connected to tubes (18) for the addition of reagents. This static mixer (8) is connected to the entry (10) of the flotation device (2). On the inside of this device (2) there is a flotation tank (10) in which there is a large turn screw (12) and whose turn is variable decreasing from the entry end towards the exit end. This screw (12) is connected to a motor (11) which makes it turn in the direction of the thrust towards the other end to the entrance (9) from the static mixer (8) and has a controlled variable speed.

At the opposite end to the entrance (9) of the flotation tank (10) there is a variable height level water separator (13). This separator (13) has a chamber (14) at its rear part that empties the floating sludge by means of a discharge outlet (15). In turn the tank (10) has a clarified water outlet (16) at the bottom.

## Claims

1. Waste water treatment device, which includes at least a centrifuge device (1) for the separation of the waste solids and the heavy sludge from the clarified water and a device (2) for the elimination of pollutant particles in suspension and the light sludge by flotation, **characterised in that** the centrifuge device (1) there is a hollow vertical centrifuge drum (4), turned by a motor, with an internal co-axial Archimedean screw (3), an upper inlet (5) for the waste water to be treated and a lower outlet (17) for the solid waste and heavy sludge separated; and **in that** the drum (4) is connected at the top to a waste water pressurisation chamber (6) with paddles; and **in that** the flotation separation device (2) includes a tank (10) that is noticeably horizontal, on the inside of which there is wide blade screw (12) to move the floating sludge towards the point of evacuation from the inlet point (9) of the water to be treated.

2. Waste water treatment device according to claim 1, **characterised in that** at least the bottom of the drum has an open converging tronco-conical area, said drum being suitable to cause the water to rise up its walls for expulsion at the top.

3. Waste water treatment device according to claims 1 and 2, **characterised in that** the inner face of the drum has several small vertical channels or seams for the aeration and pressurisation of the waste water.

4. Waste water treatment device according to claim 1, **characterised in that** the Archimedean screw is freely supported on bearings, with its coaxial axis over the vertical axis of the drum, and is able to collect the heavy dehydrated sludge and expel it through the lower outlet (17).

5. Waste water treatment device according to claim 1, **characterised in that** it has a static mixer (8) fitted between the water outlet (7) of the centrifuge device (1) and the water inlet (9) of the flotation device (2).

6. Waste water treatment device according to claim 5, **characterised in that** the static mixer (8) has tubes (18) for the addition of anti-pollution reagents and agents to the water to be treated.

7. Waste water treatment device according to claim 1, **characterised in that** the screw (12) is connected to a variable controlled speed motor (11) for the regulation of the advance of the floating sludge and its compaction.

8. Waste water treatment device according to claim 1, **characterised in that** the tank (10) has a level separator (13) outlet at its end for the floating sludge into a tank (14) that is connected to the outside by means of a discharge outlet (15); and because the tank (10) has an outlet (16) for the clarified water at the bottom end.

9. Waste water treatment device according to claim 1, **characterised in that** the screw (12) has a variable pitch, with a pitch decrease between the turns in line with the advance of the flow direction of the sludge on the inside of the tank (10) for the compaction and evacuation of the floating sludge.

## Patentansprüche

1. Abwasserreinigungsanlage, bestehend aus mindestens einer Zentrifuge (1) zum Trennen der festen Rückstände und der schweren Schlämme vom Klärwasser und einer Vorrichtung (2) zum Abscheiden der kontaminierten Schwebeteilchen und der leichten Schlämme durch Flotation, **dadurch gekennzeichnet, dass** die Zentrifuge (1) eine motorangetriebene, vertikal angeordnete, hohle Zentrifugiertrommel (4) mit koaxialer Innenschnecke (3), einen oberen Einlauf (5) für das zu behandelnde Abwasser und einen unteren Ausgang (17) für die abgesonderten festen Rückstände und schweren Schlämme aufweist, dass die Trommel (4) in ihrem oberen Teil mit einer Schaufelkammer (6) in Verbindung steht, in der das Abwasser mit Druck beaufschlagt wird, und dass die Abscheideeinrichtung (2) zum Abscheiden durch Flotation einen weitgehend horizontal liegenden Tank (10) aufweist, der im Inneren mit einer Förderschraube (12) mit breiten Blättern ausgestattet ist, um den im Wasser schwebenden Schlamm vom Einlauf (9) des zu behandelnden Wassers in den Tank bis zum Austritt aus demselben zu befördern.

2. Abwasserreinigungsanlage nach Anspruch 1, **dadurch gekennzeichnet, dass** die Trommel wenigstens im unteren Teil einen offenen, kegelstumpfförmig zusammenlaufenden Bereich aufweist, wobei diese Trommel geeignet ist, ein Aufsteigen des Wassers an den Seitenwänden zu bewirken, bis dieses oben ausgestoßen wird.

3. Abwasserreinigungsanlage nach den Ansprüchen 1 und 2, **dadurch gekennzeichnet, dass** die Innenseite der Trommel eine Vielzahl kleiner vertikaler Kanäle oder Schlitze zur Lüftung und Druckbeaufschlagung des Abwassers aufweist.

4. Abwasserreinigungsanlage nach Anspruch 1, **dadurch gekennzeichnet, dass** die Schnecke mit ihrer koaxialen Achse über der vertikalen Achse der Trommel frei gelagert ist, so dass sie den entwässerten schweren Schlamm aufnehmen und am unteren Ausgang (17) auswerfen kann.

5. Abwasserreinigungsanlage nach Anspruch 1, **dadurch gekennzeichnet, dass** sie einen Statikmischer (8) aufweist, der zwischen dem Wasseraustritt (7) aus der Zentrifuge (1) und dem Wassereinlauf (9) in die Flotationseinrichtung (2) angeordnet ist.

6. Abwasserreinigungsanlage nach Anspruch 5, **dadurch gekennzeichnet, dass** der Statikmischer (8) Zuführungen (18) zur Beigabe von Reaktionsstoffen und dekontaminierenden Substanzen ins zu behandelnde Wasser aufweist.

7. Abwasserreinigungsanlage nach Anspruch 1, **dadurch gekennzeichnet, dass** die Förderschraube (12) zur Regulierung der Vorschubgeschwindigkeit der schwebenden Schlämme sowie deren Kompaktierung mit einem Motor (11) mit variabler steuerbarer Geschwindigkeit verbunden ist.

8. Abwasserreinigungsanlage nach Anspruch 1, **dadurch gekennzeichnet, dass** der Flotationstank (10) am ausgangsseitigen Ende eine Vorrichtung zur Schlammtrennung (13) aufweist, die den schwebenden Schlamm der Höhe nach in eine Kammer (14) absondert, die über eine Abgabeöffnung (15) nach außen führt, und dass der Flotationstank (10) im unteren Teil seines ausgangsseitigen Endes einen Auslass (16) für das Klärwasser aufweist.

9. Abwasserreinigungsanlage nach Anspruch 1, **dadurch gekennzeichnet, dass** die Förderschraube (12) ein Differentialgewinde aufweist, dessen Gewindegang in dem Maße abnimmt, als der im Wasser schwebende Schlamm im Inneren des Tanks (10) in Schlammflussrichtung bis zu seiner Kompaktierung und Abführung vorgeschoben wird.

## Revendications

1. Appareil pour l'épuration des eaux usées, comprenant au minimum un dispositif (1) de centrifugation pour la séparation des déchets solides et des boues lourdes de l'eau clarifiée et un dispositif (2) d'élimination des particules en suspension contaminées et des boues légères par flottation, **caractérisé en ce que** le dispositif (1) de centrifugation comprend un tambour (4) vertical centrifuge creux, actionné par un moteur, avec un limaçon (3) intérieur coaxial, une entrée (5) supérieure d'eau usée à traiter et une sortie (17) inférieure de déchets solides et de boues lourdes séparées ; et **en ce que** le tambour (4) est relié dans le haut à une chambre (6) à ailettes de pressurisation de l'eau usée ; et **en ce que** le dispositif (2) de séparation par flottation comprend un réservoir (10) sensiblement horizontal, à l'intérieur duquel se trouve une vis (12) à pales larges pour le déplacement des boues flottantes vers l'évacuation depuis la bouche d'entrée (9) de l'eau à traiter.

2. Appareil pour l'épuration des eaux usées, suivant la revendication 1, **caractérisé en ce que** le tambour présente, au minimum dans le bas, une zone tronconique convergente ouverte, ledit tambour étant capable de provoquer la montée de l'eau dans ses parois jusqu'à son expulsion par le haut.

3. Appareil pour l'épuration des eaux usées, suivant les revendications 1 et 2, **caractérisé en ce que** la face intérieure du tambour présente plusieurs petits canaux ou fentes verticales pour l'aération et la pressurisation de l'eau usée.

4. Appareil pour l'épuration des eaux usées, suivant la revendication 1, **caractérisé en ce que** le limaçon repose librement sur des coussinets, dont l'axe coaxial est disposé sur l'axe vertical du tambour, susceptible de recueillir les boues lourdes déshydratées et de les déverser dans la sortie (17) inférieure.

5. Appareil pour l'épuration des eaux usées, suivant la revendication 1, **caractérisé en ce qu'**il comprend un mélangeur (8) statique disposé entre la sortie (7) d'eau du dispositif (1) de centrifugation et l'entrée (9) d'eau du dispositif (2) de flottation.

6. Appareil pour l'épuration des eaux usées, suivant la revendication 5, **caractérisé en ce que** le mélangeur (8) statique comprend des conduits (18) destinés à ajouter des réactifs et des agents anticontaminants à l'eau à traiter.

7. Appareil pour l'épuration des eaux usées, suivant la revendication 1, **caractérisé en ce que** la vis (12) est reliée à un moteur (11) à vitesse variable contrôlée pour la régulation de la vitesse d'avancement des boues flottantes et pour leur compactage.

8. Appareil pour l'épuration des eaux usées, suivant la revendication 1, **caractérisé en ce que** le réservoir (10) comprend à son extrémité de sortie un séparateur (13) par niveau des boues flottantes à une chambre (14) qui communique avec l'extérieur au travers d'une goulotte (15) d'évacuation ; et **en ce que** le réservoir (10) comprend, dans la partie inférieure de son extrémité de sortie, une sortie (16) d'eau clarifiée.

9. Appareil pour l'épuration des eaux usées, suivant la revendication 1, **caractérisé en ce que** la vis (12) présente un pas différentiel, avec un décrément du pas entre les spires au fur et à mesure que le sens d'écoulement de la boue avance à l'intérieur du réservoir (10) pour le compactage et l'évacuation des boues flottantes.
